(19) **Europäisches Patentamt / European Patent Office / Office européen des brevets**

(11) **EP 2 795 863 B1**

(12) **FASCICULE DE BREVET EUROPEEN**

(45) Date de publication et mention
de la délivrance du brevet:
**29.05.2019 Bulletin 2019/22**

(21) Numéro de dépôt: **12860891.6**

(22) Date de dépôt: **19.12.2012**

(51) Int Cl.:
*H04L 27/26* (2006.01)     *H04L 1/06* (2006.01)
*H04B 7/06* (2006.01)     *H04L 27/36* (2006.01)

(86) Numéro de dépôt international:
**PCT/FR2012/052995**

(87) Numéro de publication internationale:
**WO 2013/093340 (27.06.2013 Gazette 2013/26)**

(54) **RÉDUCTION D'UN TERME D'INTERFÉRENCE INTRINSÈQUE IN OFDM/OQAM PAR MOYEN D'UN PRÉFILTRE DE RETOURNEMENT TEMPOREL DANS L'EMETTEUR**

REDUKTION EINES IMAGINÄREN EMPFÄNGERS IN EINEM OFDM/OQAM DURCH VERWENDUNG EINES ZEITUMKEHRFILTERS IM SENDER

REDUCTION OF AN IMAGINARY RECEIVER IN OFDM/OQAM BY USE OF A TIME REVERSAL FILTER IN THE TRANSMITTER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.12.2011 FR 1162407**

(43) Date de publication de la demande:
**29.10.2014 Bulletin 2014/44**

(73) Titulaire: **Orange
75015 Paris (FR)**

(72) Inventeurs:
• **SIOHAN, Pierre
F-35200 Rennes (FR)**
• **JAHAN, Bruno
F-35190 Tinteniac (FR)**
• **PHAN HUY, Dinh Thuy
F-75004 Paris (FR)**
• **HELARD, Maryline
F-35700 Rennes (FR)**
• **DUBOIS, Thierry
F-35700 Rennes (FR)**

(74) Mandataire: **Cabinet Beau de Loménie
158, rue de l'Université
75340 Paris Cedex 07 (FR)**

(56) Documents cités:
**WO-A1-2009/112773     WO-A1-2011/033217
WO-A2-2009/156703     FR-A1- 2 930 094**

**GB-A- 2 463 508**

• **HUNG TUAN NGUYEN ED - UMALI E M ET AL: "On the performance of one bit time reversal for multi-user wireless communications", WIRELESS COMMUNICATION SYSTEMS, 2007. ISWCS 2007. 4TH INTERNATIONAL SYMPOSIUM ON, IEEE, PISCATAWAY, NJ, USA, 1 octobre 2007 (2007-10-01), pages 672-676, XP031166854, ISBN: 978-1-4244-0978-5**
• **YUE WANG ET AL: "Full Rate Orthogonal Space-Time Block Coding in OFDM Transmission Using Time Reversal", WIRELESS COMMUNICATIONS AND NETWORKING CONFERENCE, 2009. WCNC 2009. IEEE, IEEE, PISCATAWAY, NJ, USA, 5 avril 2009 (2009-04-05), pages 1-6, XP031454228, DOI: 10.1109/WCNC.2009.4917667 ISBN: 978-1-4244-2947-9**
• **CHRISLIN LELE ET AL: "The Alamouti Scheme with CDMA-OFDM/OQAM", EURASIP JOURNAL ON ADVANCES IN SIGNAL PROCESSING, HINDAWI PUBLISHING CORP, US, vol. 2010, 18 January 2010 (2010-01-18), pages 703513-1, XP002688650, ISSN: 1687-6172, DOI: 10.1155/2010/703513**

- ZAKARIA R ET AL: "A novel FBMC scheme for Spatial Multiplexing with Maximum Likelihood detection", WIRELESS COMMUNICATION SYSTEMS (ISWCS), 2010 7TH INTERNATIONAL SYMPOSIUM ON, IEEE, PISCATAWAY, NJ, USA, 19 September 2010 (2010-09-19), pages 461-465, XP031792295, ISBN: 978-1-4244-6315-2

- EL TABACH M ET AL: "Spatial Data Multiplexing Over OFDM/OQAM Modulations", PROCEEDINGS OF THE 2007 IEEE INTERNATIONAL CONFERENCE ON COMMUNICATIONS (ICC 2007), 24-28 JUNE 2007, GLASGOW, UK, IEEE, PISCATAWAY, NJ, USA, 1 June 2007 (2007-06-01), pages 4201-4206, XP031126326, ISBN: 978-1-4244-0353-0

**EP 2 795 863 B1**

**Description**

Arrière-plan de l'invention

L'invention se rapporte au domaine général des télécommunications.

Elle concerne plus particulièrement la transmission de signaux numériques basés sur des modulations multi-porteuses de type OFDM-OQAM (Orthogonal Frequency Division Multiplex (multiplexage par répartition orthogonale de la fréquence) - Offset Quadrature Amplitude Modulation (Modulation d'Amplitude en Quadrature décalée)), dans le cadre de systèmes comportant un nombre d'antennes d'émission N supérieur ou égal à 1 et une antenne de réception. Ces systèmes sont également connus sous l'appellation de systèmes SISO (Single Input Single Output) en présence d'une seule antenne d'émission et d'une seule antenne en réception ou de systèmes MISO (Multiple Input Single Output) en présence de plusieurs antennes en émission et d'une seule antenne en réception.

L'invention peut s'appliquer dans le domaine des communications filaires (ex. systèmes xDSL (x Digital Subscriber Line), PLC (Power Line Communication ou courant porteur en ligne, CPL), optique, etc.) ou sans fil (ex. systèmes B3G (Beyond 3G), WLAN (Wireless Local Area Network), etc.), en liaison montante (terminal vers point d'accès/station de base) et/ou en liaison descendante (point d'accès/station de base vers terminal).

De façon connue, le bruit lié aux imperfections des systèmes de communication et à la nature physique des composants employés dans ces systèmes (tels que par exemple les antennes) affectent la transmission des signaux numériques. Ceux-ci sont par ailleurs sujets à des déformations lorsqu'ils se propagent entre la ou les antennes d'émission et l'antenne de réception (ex. via un canal aérien). Dans la suite de la description, on englobera dans la notion de canal de transmission ou de propagation entre une antenne d'émission et une antenne de réception, non seulement les effets du médium sur lequel se propage le signal numérique entre l'antenne d'émission et l'antenne de réception (ex. canal hertzien ou filaire) mais également les effets induits par les antennes d'émission et de réception sur le signal numérique.

L'invention a une application privilégiée mais non limitative dans le cadre de transmissions de données sur des canaux de transmission dits sélectifs en fréquence (canaux à trajets multiples) et à variations relativement lentes dans le temps.

De façon connue, la sélectivité en fréquence d'un canal de transmission est liée au signal numérique que l'on souhaite transmettre sur ce canal : elle traduit le fait que ce signal numérique a des composantes fréquentielles qui sont atténuées différemment par le canal de transmission. En d'autres termes, ce phénomène apparait lorsque la largeur de bande du signal à transmettre est beaucoup plus grande que la bande de cohérence du canal de transmission, la bande de cohérence d'un canal étant définie comme la largeur de bande minimale pour laquelle deux atténuations du canal sont indépendantes. La compensation des effets des distorsions introduites par les canaux multi-trajets est alors réalisée à l'aide de techniques d'égalisation.

Dans ce contexte, il est généralement admis que les systèmes de transmission multi-porteuses (ou systèmes MCM pour Multi Carrier Modulation), tels que notamment les systèmes OFDM, présentent de nombreux avantages. En effet, en mettant en oeuvre une transmission des données sur plusieurs fréquences porteuses en parallèle (c'est-à-dire un multiplexage fréquentiel sur plusieurs fréquences porteuses aussi appelées porteuses ou sous-porteuses), les systèmes de transmission multi-porteuse répartissent l'information à transmettre à fort débit sur un grand nombre de sous-bandes élémentaires modulées à bas débit. Ceci permet avantageusement de remplacer l'étape d'égalisation d'un canal à trajets multiples qui peut s'avérer complexe dans le domaine temporel pour les systèmes mono-porteuse par une étape d'égalisation simple (à un coefficient par porteuse) réalisée dans le domaine fréquentiel.

Le multiplexage par répartition orthogonale de la fréquence ou OFDM est une technique de modulation multi-porteuse qui impose une contrainte d'orthogonalité entre les sous-porteuses afin de limiter les interférences entre les porteuses (ou ICI pour Inter Carrier Interference) tout en optimisant l'occupation spectrale. L'OFDM bénéficie par ailleurs de schémas d'implémentation simples et efficaces à base de transformées de Fourier rapides, inverses en émission (IFFT, Inverse Fast Fourier Transform) et directes en réception (FFT, Fast Fourier Transform).

La contrainte d'orthogonalité entre les sous-porteuses est assurée par l'utilisation d'une fonction rectangulaire (fonction porte $\Pi$) de mise en forme du signal multi-porteuse. L'ajout de redondance sous forme d'un préfixe cyclique (CP, Cyclic Prefix) ou d'un intervalle de garde (ex. constitué de zéros) en sortie de la transformée de Fourier rapide inverse permet en outre de limiter les distorsions dues aux interférences introduites par le canal entre les symboles (ISI, Inter Symbol Interference) et entre les porteuses.

L'expression d'un signal OFDM avec préfixe cyclique (signal CP-OFDM) en bande de base et en temps discret $S_{CP-OFDM}[k]$ est donnée, pour M sous-porteuses, à l'instant $kТе$, Те désignant la période d'échantillonnage, par l'équation suivante :

3

$$s_{CP-OFDM}[k] = \sum_{m=0}^{M-1} \sum_{n=-\infty}^{+\infty} c_{m,n} \prod[k - n(M + L_{CP})]e^{j\frac{2\pi}{M}mk}$$

où $j^2$=-1, $\Pi$ désigne une fonction porte de durée M, $c_{m,n}$ est un symbole complexe (par exemple un symbole d'une modulation QAM (Quadrature Amplitude Modulation)) émis sur la porteuse m à l'instant n, et $L_{CP}$ est la longueur en nombre d'échantillons du préfixe cyclique.

Toutefois, si l'ajout d'un préfixe cyclique (ou d'un intervalle de garde) de longueur $L_{CP}$ supérieure à la longueur maximale du canal facilite l'égalisation du canal en évitant les problèmes d'interférences ISI, il s'ensuit une perte d'efficacité spectrale qui est d'autant plus importante que le préfixe cyclique (ou l'intervalle de garde) est long. En effet, le préfixe cyclique ou l'intervalle de garde introduit ne porte pas d'information utile de manière à garantir que les informations reçues et traitées en réception proviennent d'un même symbole multi-porteuse.

Pour pallier cet inconvénient, il est connu d'utiliser une modulation de type OFDM/OQAM (Orthogonal Frequency Division Multiplexing/Offset Quadrature Amplitude Modulation). Cette modulation met en oeuvre, sur chaque sous-porteuse, une décomposition sur deux demi-temps symbole d'un symbole QAM complexe $c_{m,n}$ en une paire de symboles réels constituée de la partie réelle $\Re(c_{m,n})$ et de la partie imaginaire $\Im(c_{m,n})$ du symbole complexe $c_{m,n}$. Les parties réelles et imaginaires des symboles complexes à transmettre sont en outre décalées d'un demi-temps symbole entre deux sous-porteuses successives. Cette décomposition en symboles réels permet avantageusement de relâcher la contrainte d'orthogonalité entre les sous-porteuses au domaine des réels, ce qui facilite la conception de fonctions orthogonales de mise en forme du signal multi-porteuse (aussi connues sous le nom de fonctions ou filtres prototypes) bien localisées en fréquence et en temps.

Le signal OFDM/OQAM $s_{OFDM-OQAM}[k]$ en bande de base et en temps discret pour M sous-porteuses peut ainsi s'exprimer, à l'instant kTe, Te désignant la période d'échantillonnage, sous la forme suivante :

$$s_{OFDM-OQAM}[k] = \sum_{m=0}^{M-1} \sum_{n=-\infty}^{+\infty} a_{m,n} \underbrace{f\left[k - n\frac{M}{2}\right] e^{j\frac{2\pi}{M}m(k-(LF-1)/2)} e^{j\phi_{m,n}}}_{f_{m,n}[k]}$$

où les coefficients $a_{m,n}$ sont des coefficients réels (par exemple des symboles PAM (Pulse Amplitude Modulation)), f[] désigne un filtre prototype de longueur LF, et $\phi_{m,n}$ désigne un terme de phase choisi par exemple égal à $\frac{\pi}{2}(m + n)$.

Ainsi, la modulation OFDM/OQAM s'affranchit de la présence d'un intervalle de garde ou préfixe cyclique grâce à un choix judicieux du filtre prototype f modulant chaque sous-porteuse du signal qui permet de bien localiser chacune de ces sous-porteuses en temps et en fréquence, et qui vérifie une contrainte d'orthogonalité réelle entre les sous-porteuses qui se traduit par :

$$\Re\{\langle f_{m,n}, f_{m',n'}\rangle\} = \Re\left\{\sum_{k=-\infty}^{+\infty} f_{m,n}[k]f_{m',n'}^*[k]\right\} = \delta_{m,m'}\delta_{n,n'}$$

où $\langle g, h\rangle$ désigne le produit scalaire entre g et h. Le produit scalaire $\langle f_{m,n}, f_{m',n'}\rangle$ est donc un nombre imaginaire pur pour (m, n) $\neq$ (m', n'). Dans la suite de la description on utilisera par souci de simplification la notation suivante : $\langle f\rangle_{m,n}^{p,q} = -j\langle f_{m,n}, f_{p,q}\rangle$.

Un filtre prototype connu vérifiant cette contrainte est par exemple le filtre prototype obtenu à partir de la fonction Iota décrit dans la demande de brevet FR 2 733 869 ou le filtre prototype TFL1 utilisé dans le document de C. Lélé et al. intitulé « Channel estimation methods for preamble-based OFDM/OQAM modulations », European Wireless, Avril 2007 (référencé dans la suite de la description par D1).

Toutefois, en dépit de l'utilisation d'un filtre prototype bien localisé en temps et en fréquence, la modulation OFDM/OQAM produit par construction un terme d'interférence intrinsèque imaginaire. En effet, on peut aisément montrer, sous des hypothèses classiques concernant le modèle de transmission (canal invariant dans un voisinage $\Omega_{\Delta m,\Delta n}$ s'écartant au plus de $\pm\Delta m, \pm\Delta n$ autour de chaque point temps-fréquence de coordonnées (m,n), filtre prototype f bien localisé en temps et en fréquence et translatées du filtre prototype invariantes pour un retard maximum du canal égal à un nombre déterminé d'échantillons), que pour un système SISO, après transmission sur un canal sélectif en fréquence et perturbation par un bruit additif noté $\eta$, le signal démodulé peut s'écrire sous la forme :

$$y_{m,n} = h_{m,n}\left(a_{m,n} + ja_{m,n}^{(i)}\right) + J_{m,n} + \eta_{m,n}$$

où :

- $h_{m,n}$ désigne la valeur du canal complexe sur la sous-porteuse m à l'instant n ;
- $\eta_{m,n}$ désigne la composante du bruit à l'instant n et sur la sous-porteuse m ;
- $ja_{m,n}^{(i)}$ désigne un terme d'interférence intrinsèque purement imaginaire affectant le symbole $a_{m,n}$ et dépendant de ses symboles voisins à l'instant n donné par :

$$a_{m,n}^{(i)} = \sum_{(p,q)\in\Omega_{\Delta m,\Delta n}-(0,0)} a_{m+p,n+p}\langle f\rangle_{p,q}^{m,n}$$

avec $\langle f\rangle_{m,n}^{p,q} = -j\langle f_{m,n}, f_{p,q}\rangle$ ; et

- $J_{m,n}$ désigne un terme d'interférence créé par des symboles situés en dehors du voisinage du symbole $a_{m,n}$.

Le calcul des termes d'interférences est décrit plus en détail dans le document D1 et ne sera pas repris ici.

Si d'une part le filtre prototype f est bien localisé en fréquence et en temps et si d'autre part le canal n'est pas trop sélectif en fréquence et/ou le rapport signal à bruit n'est pas trop élevé, le terme $J_{m,n}$ peut être négligé face au terme de bruit $\eta_{m,n}$. On notera que cette approximation convient dans un grand nombre de scénarii rencontrés en pratique. Le signal démodulé peut alors être approximé par :

$$y_{m,n} \approx h_{m,n}\left(a_{m,n} + ja_{m,n}^{(i)}\right) + \eta_{m,n}$$

En partant de cette approximation, diverses techniques peuvent alors être envisagées en émission ou en réception pour supprimer le terme d'interférence intrinsèque $a_{m,n}^{(i)}$ dans le cas d'un système SISO. L'une de ces techniques, mentionnée dans le document D1, consiste par exemple à utiliser en réception un égaliseur ZF à un coefficient par porteuse appliqué à la partie réelle du signal démodulé $y_{m,n}$.

Toutefois, si ces techniques sont efficaces dans le cas d'un système SISO (i.e. à une seule antenne en émission et en réception), elles ne sont pas facilement transposables à un système multi-antennes de type MISO, et notamment à un système utilisant un codage spatio-temporel tel que par exemple le schéma de codage orthogonal de rendement 1 défini pour deux antennes d'émission dans le document de S. Alamouti intitulé « A simple Transmis Diversity Technique for Wireless Communications », IEEE, Journal of Selected Areas Communication, 1998, n°16, pages 1451-1458.

Le schéma de codage spatio-temporel proposé par Alamouti correspond à un système de codage en boucle ouverte pour lequel deux symboles complexes successifs s1 et s2 sont émis sur deux antennes d'émission conformément à la matrice de codage suivante :

$$G2 = \overbrace{\begin{bmatrix} s1 & -s2^* \\ s2 & s1^* \end{bmatrix}}^{\text{antennes }\downarrow,\text{temps }\rightarrow}$$

où s* désigne le complexe conjugué du symbole s. Les lignes de la matrice G2 indiquent les symboles émis sur les différentes antennes d'émission : ainsi, les symboles s1 puis -s2* sont émis sur la première antenne, tandis que les symboles s2 et s1* sont émis sur la seconde antenne.

**EP 2 795 863 B1**

La matrice de codage G2 est une matrice orthogonale complexe, c'est-à-dire, G2G2^H=I, où I désigne la matrice identité de dimensions 2x2 et ^H l'opérateur hermitien. Ainsi, le schéma de codage proposé par Alamouti offre avantageusement un rendement 1 tout en assurant en réception un découplage des symboles transmis sur chaque antenne permettant ainsi un décodage linéaire simple à maximum de vraisemblance.

L'application du schéma de codage d'Alamouti à une modulation OFDM conduit à la réécriture de la matrice de codage GC2, par exemple sous la forme suivante :

$$GC2 = \begin{bmatrix} c_{m,n} & -c^*_{m,n+1} \\ c_{m,n+1} & c^*_{m,n} \end{bmatrix}$$

où $C_{m,n}$ désigne le symbole complexe émis à un instant n sur une sous-porteuse m.

Un schéma de codage similaire peut également être défini pour une modulation de type OFDM-OQAM, en prenant en compte le fait que, comme mentionné précédemment, la modulation OFDM-OQAM décompose chaque symbole complexe $c_{m,n}$ en une paire de symboles réels ($\Re(c_{m,n})$ et $\Im(c_{m,n})$), espacés sur une même sous-porteuse d'un demi-temps symbole T/2 (T désignant la durée d'un symbole complexe), et également décalés d'un demi-temps symbole entre deux sous-porteuses consécutives. En notant $a_{m,2n+k,i}$, les symboles réels émis sur la porteuse m à quatre instants successifs (2n+k)T/2, k=0,...,3, sur l'antenne i, i=0, 1, on peut définir le schéma de codage orthogonal suivant :

$$a_{m,2n,0} = \Re(c_{m,2n})$$

$$a_{m,2n,1} = \Re(c_{m,2n+1})$$

$$a_{m,2n+1,0} = \Im(c_{m,2n})$$

$$a_{m,2n+1,1} = \Im(c_{m,2n+1})$$

$$a_{m,2n+2,0} = -\Re((c_{m,2n+1})^*) = -\Re(c_{m,2n+1}) = -a_{m,2n,1}$$

$$a_{m,2n+2,1} = \Re((c_{m,2n})^*) = \Re(c_{m,2n}) = a_{m,2n,0}$$

$$a_{m,2n+3,0} = -\Im((c_{m,2n+1})^*) = \Im(c_{m,2n+1}) = a_{m,2n+1,1}$$

$$a_{m,2n+3,1} = \Im((c_{m,2n})^*) = -\Im(c_{m,2n}) = -a_{m,2n+1,0}$$

De façon similaire au cas SISO, si $h_{m,n,i}$ désigne le gain du canal complexe entre l'antenne d'émission i et l'antenne de réception, pour la sous-porteuse m, à l'instant nT/2, et que l'on suppose ce gain constant entre les instants 2nT/2 et (2n+3)T/2, le signal reçu sur l'antenne de réception pour la sous-porteuse m est donné par :

$$y_{m,2n} = h_{m,2n,0}\left(a_{m,2n,0} + ja^{(i)}_{m,2n,0}\right) + h_{m,2n,1}\left(a_{m,2n,1} + ja^{(i)}_{m,2n,1}\right) + n_{m,2n,0},$$

$$y_{m,2n+1} = h_{m,2n,0}\left(a_{m,2n+1,0} + ja^{(i)}_{m,2n+1,0}\right) + h_{m,2n,1}\left(a_{m,2n+1,1} + ja^{(i)}_{m,2n+1,1}\right) + n_{m,2n+1,1},$$

6

$$y_{m,2n+2} = h_{m,2n,0}\left(a_{m,2n+2,0} + ja_{m,2n+2,0}^{(i)}\right) + h_{m,2n,1}\left(a_{m,2n+2,1} + ja_{m,2n+2,1}^{(i)}\right) + n_{m,2n+2,0},$$

$$y_{m,2n+3} = h_{m,2n,0}\left(a_{m,2n+3,0} + ja_{m,2n+3,0}^{(i)}\right) + h_{m,2n,1}\left(a_{m,2n+3,1} + ja_{m,2n+3,1}^{(i)}\right) + n_{m,2n+3,1},$$

où $a_{m,n,i}^{(i)}$ désigne l'interférence intrinsèque affectant le symbole réel $a_{m,n,i}$ dépendant de ses symboles voisins à l'instant n.

En posant $z_{m,2n} = y_{m,2n} + jy_{m,2n+1}$ et $z_{m,2n+1} = y_{m,2n+2} + jy_{m,2n+3}$, on obtient des équations précédentes, après quelques calculs décrits plus en détail dans le document D1 cité précédemment, l'expression suivante :

$$\underbrace{\begin{bmatrix} z_{m,2n} \\ \left(z_{m,2n+1}\right)^* \end{bmatrix}}_{z_{2n}} = \underbrace{\begin{bmatrix} h_{m,2n,0} & h_{m,2n,1} \\ h_{m,2n,1}^* & -h_{m,2n,0}^* \end{bmatrix}}_{Q_{2n}} \underbrace{\begin{bmatrix} c_{m,2n} \\ c_{m,2n+1} \end{bmatrix}}_{c_{2n}} +$$

$$\underbrace{\begin{bmatrix} h_{m,2n,0} & h_{m,2n,1} & 0 & 0 \\ 0 & 0 & h_{m,2n,1}^* & -h_{m,2n,0}^* \end{bmatrix}}_{K_{2n}} \underbrace{\begin{bmatrix} x_{m,2n,0} \\ x_{m,2n,1} \\ x_{m,2n+2,0} \\ x_{m,2n+2,0} \end{bmatrix}}_{x_{2n}} + \underbrace{\begin{bmatrix} \mu_{m,2n} \\ \mu_{m,2n+1}^* \end{bmatrix}}_{\mu_{2n}}$$

où :

- la matrice $Q_{2n}$ est une matrice orthogonale ;
- $\mu_{2n}$ est une composante de bruit ; et
- $x_{2n}$ est un vecteur dont les composantes sont des combinaisons linéaires de termes d'interférences intrinsèques.

Cette expression montre qu'à la différence du cas SISO, dans le cas d'un système MISO utilisant un codage de type Alamouti, le signal reçu sur l'antenne de réception présente un terme d'interférence $K_{2n}x_{2n}$ intrinsèque qui, même en l'absence de bruit, est difficile à éliminer.

Des solutions existent dans l'état actuel de la technique permettant de remédier à cet inconvénient. Toutefois pour la plupart, elles requièrent soit la mise en oeuvre de schémas de réception complexes, soit l'ajout d'un préfixe cyclique conduisant à une perte d'efficacité spectrale.

Le document « The Alamouti Scheme with CDMA-OFDM/OQAM » de Chrislin Lele et al. divulgue un procédé d'émission OFDM-OQAM dans lequel un codage spatio-temporel est utilisé. Le problème d'interférence intrinsèque est pallié en combinant CDMA avec OFDM/OQAM.

Il existe donc un besoin d'un schéma d'émission de type OFDM-OQAM ne conduisant pas à une perte d'efficacité spectrale, et pouvant être utilisé dans le cadre d'un système SISO ou MISO sans nécessiter la mise en oeuvre d'algorithmes de réception complexes.

Objet et résumé de l'invention

L'invention est définie dans les revendications indépendantes.

Plus précisément, si on modélise le canal de transmission entre l'antenne d'émission considérée et l'antenne de réception par un filtre linéaire à réponse impulsionnelle finie h(t) (hypothèse de modélisation classique d'un canal multi-trajets), et si $\hat{h}(t)$ désigne une estimation de la réponse du canal de transmission, le préfiltre de retournement temporel appliqué au cours de l'étape de filtrage est un filtre adapté dont la réponse impulsionnelle est $\hat{h}^*(-t)$. De façon équivalente, si H(z) désigne la transformée en z de la version discrète du canal de transmission et $\hat{H}(z)$ la transformée en z de l'estimation du canal de transmission, le préfiltre de retournement temporel appliqué au cours de l'étape de filtrage a pour transformée en z est donnée par $\hat{H}^*(z^{-1})$.

L'invention offre ainsi un nouveau schéma d'émission d'un signal multi-porteuse de type OFDM-OQAM fonctionnant en boucle fermée et utilisant une estimation du canal de transmission entre la ou les antennes d'émission et l'antenne de réception. Cette estimation peut être réalisée par exemple au niveau du dispositif récepteur et remontée au dispositif émetteur par l'intermédiaire d'une voie de retour.

Plus précisément, l'invention propose d'émettre des symboles OFDM-OQAM associés à une antenne d'émission du dispositif émetteur sur un canal équivalent résultant de la convolution du préfiltre de retournement temporel et du canal de transmission correspondant à cette antenne d'émission.

Or, on peut aisément montrer, en faisant l'hypothèse que l'estimation du canal dont on dispose au niveau du dispositif émetteur est parfaite, que ce canal équivalent est un canal conjugué symétrique dont la réponse en fréquence est réelle. Ceci a pour conséquence que la contrainte d'orthogonalité réelle sur les sous-porteuses vérifiée par le filtre prototype reste avantageusement vérifiée après passage par ce canal équivalent puisque sa réponse fréquentielle est réelle, même si le canal de transmission associé à chaque antenne est complexe.

On évite ainsi la génération d'un terme d'interférence intrinsèque purement imaginaire difficile à supprimer tel que celui généré pour une modulation OFDM-OQAM de l'état de la technique. L'invention ne nécessite donc pas *a fortiori* de mise en oeuvre de schémas de réception complexes pour éliminer cette interférence, et peut utiliser au contraire des schémas de réception linéaires classiques.

On note que le canal équivalent a un étalement des retards plus important que le canal de transmission complexe h(t). Toutefois, ce retard ne nuit pas aux performances de la modulation OFDM/OQAM car le profil de puissance de ce canal équivalent est également plus « resserré » autour de son coefficient central dans le sens où le coefficient central a une amplitude réelle plus importante (égale à la somme des amplitudes au carré de chaque trajet) et les coefficients associés aux multi-trajets sont plus fortement atténués que le canal de transmission entre l'antenne d'émission considérée et l'antenne de réception. En outre, la solution proposée par l'invention ne requérant pas l'ajout d'un préfixe cyclique ou d'un intervalle de garde, cet étalement des retards n'a pas d'impact à proprement parler sur l'efficacité spectrale du schéma d'émission.

Le schéma d'émission proposé par l'invention peut être utilisé avantageusement dans le cadre d'un système de communication SISO ou MISO, et notamment d'un système de communication MISO utilisant un codage de type spatio-temporel ou spatio-fréquentiel.

Préférentiellement, la matrice de codage est une matrice orthogonale réelle. Toutefois l'invention s'applique également à une matrice de codage non orthogonale.

Le codage appliqué au cours de l'étape de codage est par exemple un codage spatio-temporel permettant de coder les symboles à valeurs réelles selon une dimension spatiale et selon une dimension temporelle (i.e. sur plusieurs antennes d'émission et réparties sur plusieurs temps symbole).

En variante, le codage appliqué au cours de l'étape de codage est un codage spatio-fréquentiel permettant de coder les symboles à valeurs réelles selon une dimension spatiale et selon une dimension fréquentielle (i.e. sur plusieurs antennes d'émission et sur plusieurs sous-porteuses de la modulation OFDM).

Préférentiellement, le codage appliqué est un codage de rendement 1 afin de maximiser l'efficacité spectrale. Toutefois l'invention s'applique également pour des codages de rendement inférieur.

Autrement dit, l'invention, via la combinaison d'une modulation OFDM-OQAM et du principe de retournement temporel, permet avantageusement d'utiliser des codes spatio-temporels ou spatio-fréquentiels réels, et ce sans perte de performance puisque le canal équivalent est un canal réel. L'utilisation dans le schéma d'émission d'un code spatio-temporel ou spatio-fréquentiel orthogonal permet en outre de bénéficier de la diversité offerte par la présence d'antennes multiples en émission tout en assurant une démodulation simple du signal multi-porteuse résultant de la combinaison des signaux reçus de ces multiples antennes.

Or, il est connu qu'il existe des codes spatio-temporels (ou spatio-fréquentiels) orthogonaux réels de rendement maximal (c'est-à-dire de rendement 1), quel que soit le nombre d'antennes d'émission considéré. Au contraire, il n'existe de codes spatio-temporels (ou spatio-fréquentiels) orthogonaux complexes de rendement 1 que pour un nombre d'antennes d'émission égal à deux.

L'invention offre donc la possibilité d'utiliser un code spatio-temporel ou spatio-fréquentiel orthogonal de rendement maximal quel que soit le nombre d'antennes d'émission du dispositif émetteur.

On notera que la combinaison d'un codage spatio-temporel ou spatio-fréquentiel réel orthogonal, d'une modulation OFDM-OQAM et du principe de retournement temporel telle que proposée par l'invention ne résulte pas d'une opération évidente pour l'homme du métier. Elle suppose en effet une connaissance très précise et une prise en compte judicieuse des conditions d'orthogonalité liées à trois domaines distincts associés respectivement à la modulation OFDM-OQAM, au codage spatio-temporel/spatio-fréquentiel et au retournement temporel.

Dans un mode particulier de réalisation, les différentes étapes du procédé d'émission sont déterminées par des instructions de programmes d'ordinateurs.

En conséquence, l'invention vise aussi un programme d'ordinateur sur un support d'informations, ce programme étant susceptible d'être mis en oeuvre dans un dispositif émetteur ou plus généralement dans un ordinateur, ce programme comportant des instructions adaptées à la mise en oeuvre des étapes d'un procédé d'émission tel que décrit ci-dessus.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

L'invention vise aussi un support d'informations lisible par un ordinateur, et comportant des instructions d'un programme d'ordinateur tel que mentionné ci-dessus.

Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy disc) ou un disque dur.

D'autre part, le support d'informations peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations peut être un circuit intégré dans lequel le programme est incorporé, le circuit étant adapté pour exécuter ou pour être utilisé dans l'exécution du procédé en question.

Selon un autre aspect, l'invention vise également un procédé de réception d'un signal multi-porteuse de type OFDM-OQAM, dit signal multi-porteuse reçu, mis en oeuvre par un dispositif récepteur comportant une antenne de réception, le signal multi-porteuse reçu résultant de l'émission sur un canal de propagation d'au moins un signal multi-porteuse de type OFDM-OQAM conformément à un procédé d'émission selon l'invention, par un dispositif émetteur comprenant au moins une antenne d'émission, ce procédé de réception comportant une étape de démodulation OFDM-OQAM du signal-multiporteuse reçu.

Corrélativement, l'invention vise aussi un dispositif récepteur, apte à recevoir un signal multi-porteuse de type OFDM-OQAM, dit signal multi-porteuse reçu, mis en oeuvre par un dispositif récepteur comportant une antenne de réception, ce signal multi-porteuse reçu résultant de l'émission sur un canal de propagation d'au moins un signal multi-porteuse de type OFDM-OQAM par un dispositif émetteur comprenant au moins une antenne d'émission et conforme à l'invention, ce dispositif récepteur comportant un démodulateur OFDM-OQAM apte à démoduler le signal-multiporteuse reçu.

On peut également envisager, dans d'autres modes de réalisation, que le procédé d'émission, le procédé de transmission, le dispositif émetteur et le système de communication selon l'invention présentent en combinaison tout ou partie des caractéristiques précitées.

Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

- la figure 1 illustre, de façon schématique, le nouveau schéma d'émission proposé par l'invention ;
- la figure 2 représente un dispositif émetteur, un dispositif récepteur et un système de communication SISO conformes à l'invention dans un premier mode de réalisation ;
- la figure 3 représente les principales étapes d'un procédé d'émission, d'un procédé de réception et d'un procédé de transmission conformes à l'invention dans un premier mode de réalisation dans lequel ils sont mis en oeuvre respectivement par le dispositif émetteur, par le dispositif récepteur et par le système de communication SISO de la figure 2 ;
- la figure 4 représente un dispositif émetteur, un dispositif récepteur et un système de communication MISO conformes à l'invention dans un second mode de réalisation ; et
- la figure 5 représente les principales étapes d'un procédé d'émission, d'un procédé de réception et d'un procédé de transmission conformes à l'invention dans un second mode de réalisation dans lequel ils sont mis en oeuvre respectivement par le dispositif émetteur, par le dispositif récepteur et par le système de communication MISO de la figure 4.

Description détaillée de l'invention

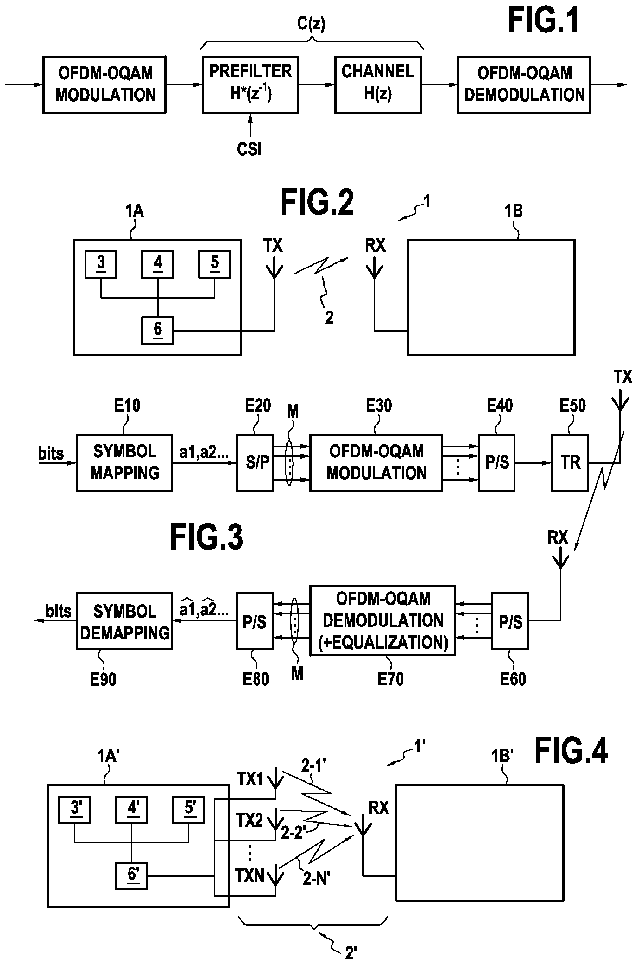

Comme mentionné précédemment, l'invention propose avantageusement un nouveau schéma d'émission de signaux multi-porteuses de type OFDM-OQAM apte à être mis en oeuvre dans un système SISO ou MISO et fonctionnant en boucle fermée à partir de la connaissance du canal de transmission (ou canal de propagation). Ce nouveau schéma est illustré à la **figure 1**.

La notion de canal de transmission entre une antenne d'émission et une antenne de réception inclut au sens de l'invention les effets du canal de propagation à proprement parler entre l'antenne d'émission et l'antenne de réception, ainsi que les contributions de l'antenne d'émission et de l'antenne de réception. On note que dans un système à entrées multiples et à sortie unique (i.e. comportant plusieurs antennes d'émission et une seule antenne de réception), il existe autant de canaux de transmission que de paires (antenne d'émission, antenne de réception), soit autrement dit, autant que d'antennes d'émission.

Plus précisément, le principe général de l'invention repose sur l'application d'une technique de retournement temporel du canal de transmission (entre chaque antenne d'émission et l'antenne de réception) à une modulation multiporteuse de type OFDM-OQAM.

En d'autres mots, en référence à la figure 1, les symboles OFDM-OQAM sont convolués, avant leur émission via l'antenne d'émission sur le canal de transmission, à un préfiltre de retournement temporel (i.e. filtre adapté) dont les coefficients sont obtenus par retournement temporel des coefficients du canal de transmission (ou plus précisément d'une estimée du canal de transmission).

Supposons que le canal de transmission est un canal sélectif en fréquence composé de L trajets modélisé par un filtre linéaire ayant pour coefficients complexes $h_0, h_1, ..., h_{L-1}$. On note $h = (h_0, h_1, ..., h_{L-1})$ le vecteur des coefficients complexes du canal. Dans la suite de la description, on utilisera indifféremment les coefficients du canal, sa réponse impulsionnelle temporelle ou sa transformée en z pour désigner et qualifier le canal de transmission, ces différentes représentations étant équivalentes. Il en sera de même pour le préfiltre de retournement temporel.

Les coefficients $h_\ell, \ell = 0, ..., L - 1$ sont des coefficients complexes dont la partie imaginaire et la partie réelle sont distribuées selon une loi gaussienne centrée, et la norme $\|h_\ell\|$ suit une loi de Rayleigh. La transformée en z notée $H(z)$ de la réponse impulsionnelle $h(t)$ du canal de transmission s'exprime sous la forme :

$$H(z) = \sum_{\ell=0}^{L-1} h_\ell z^{-\ell}$$

De façon connue en soi, la retournée temporelle du canal de transmission a pour transformée $H^*(z^{-1})$ et sa réponse impulsionnelle est $h^*(-t)$. Elle est encore définie par le vecteur de coefficients complexes $h^{RT} = (h^*_{L-1}, h^*_{L-2}, ..., h^*_0)$.

On désigne maintenant par $\hat{h} = (\hat{h}_0, \hat{h}_1, ..., \hat{h}_{L-1})$ le vecteur des coefficients estimés du canal. Dans l'hypothèse d'une estimation de canal idéale (i.e. coefficients du canal parfaitement estimés soit $\hat{h} = h$ ou, de façon équivalente $\hat{h}_i = h_i$ pour i=0,...,L-1), le préfiltre de retournement temporel a pour transformée en z :

$$\hat{H}^*(z^{-1}) = H^*(z^{-1}) = \sum_{\ell=0}^{L-1} h^*_\ell z^{\ell}$$

Le canal équivalent vu par la modulation OFDM-OQAM est donc :

$$C(z) = H(z)H^*(z^{-1}) = \sum_{\ell,k=0}^{L-1} h_\ell h_k^* z^{-(\ell-k)}$$

qui s'écrit également sous la forme :

$$C(z) = \underbrace{\sum_{\ell=0}^{L-1} \|h_\ell\|^2}_{c_0} + \sum_{k\neq\ell} \left( h_k h_\ell^* z^{-(k-\ell)} + h_k^* h_\ell z^{(k-\ell)} \right)$$

soit en fréquence, en posant z = exp(jw) :

$$C(\exp(jw)) = \sum_{\underbrace{\ell=0}_{c_0}}^{L-1} \|h_\ell\|^2 + 2 \sum_{k \neq \ell} \Big( \Re(h_k h_\ell^*) \cos\big((k-\ell)w\big) - \Im(h_k^* h_\ell) \sin\big((k-\ell)w\big) \Big)$$

Le canal équivalent est donc un canal conjugué symétrique dont le trajet central $c_0$ est un coefficient réel qui suit une loi de $\chi^2$ à 2L degrés de liberté (les autres coefficients ont une distribution gaussienne). Il apparait par ailleurs, au vu des équations précédentes, que du fait de la symétrie des coefficients du canal équivalent, sa transformée C(z) est une fonction réelle. On notera que ce raisonnement est valable qu'une représentation discrète ou continue du canal soit envisagée.

Autrement dit, conformément à l'invention, les symboles issus du modulateur OFDM-OQAM, qui portent des symboles à valeurs réelles, sont ensuite émis sur un canal équivalent C(z) réel issu de la convolution du préfiltre à retournement temporel et du canal de transmission. De ce fait, la contrainte d'orthogonalité réelle sur les fréquences porteuses vérifiée par le filtre prototype du modulateur OFDM-OQAM reste, après passage par ce canal équivalent, vérifiée. Autrement dit, aucun terme d'interférence imaginaire intrinsèque à la modulation OQAM n'est créé suite à la propagation dans le canal H(z). L'invention combine donc de façon judicieuse les différentes contraintes d'orthogonalité liées à des domaines distincts, à savoir la modulation OFDM-OQAM, le retournement temporel et pour le cas MISO, le cas échéant, le codage espace-temps ou espace-fréquence.

Nous allons maintenant décrire en référence aux figures 2 à 5 deux modes particuliers de réalisation de l'invention, dans lesquels le principe de retournement temporel est appliqué conformément à l'invention à une modulation OFDM-OQAM respectivement dans le cadre d'un système SISO et dans le cadre d'un système MISO.

La **figure 2** représente un système de communication 1 conforme à l'invention, dans un premier mode de réalisation.

Le système de communication 1 est un système SISO disposant d'une antenne TX en émission et d'une antenne RX en réception. Conformément à l'invention, il comprend :

- un dispositif émetteur 1A, conforme à l'invention ; et
- un dispositif récepteur 1B, conforme à l'invention.

Les dispositifs émetteur 1A et récepteur 1B sont séparés par un canal de transmission 2, que l'on suppose ici sélectif en fréquence et composé de L trajets complexes distribués selon une loi gaussienne. Les coefficients complexes du canal de transmission 2 sont notés h = $(h_0, h_1, ..., h_{L-1})$.

Le dispositif émetteur 1A dispose ici de l'architecture matérielle d'un ordinateur. Il comprend notamment une unité de commande 3 équipée d'un processeur, une mémoire vive 4, une mémoire morte 5, ainsi que des moyens de communication 6 intégrant l'antenne d'émission TX. Ces moyens de communication 6 sont commandés par l'unité de commande 3 pour l'émission de signaux numériques (tel qu'un signal multi-porteuse) sur l'antenne d'émission TX, et intègrent également ici une antenne de réception (non représentée) permettant au dispositif émetteur 1A de recevoir des signaux, tels que par exemple des signaux issus du dispositif récepteur 1B et contenant une estimation du canal de transmission entre l'antenne TX et l'antenne RX.

La mémoire morte 5 du dispositif émetteur 1A constitue un support d'enregistrement conforme à l'invention, lisible par le processeur de l'unité de commande 3 et sur lequel est enregistré un programme d'ordinateur conforme à l'invention, comportant des instructions pour l'exécution des étapes d'un procédé d'émission d'un signal multi-porteuse conforme à l'invention, décrites maintenant en référence à la figure 3, dans une variante particulière de réalisation.

De façon similaire, le dispositif récepteur 1B dispose ici de l'architecture matérielle d'un ordinateur. Il comprend notamment une unité de commande équipée d'un processeur, une mémoire vive, une mémoire morte, ainsi que des moyens de communication intégrant l'antenne de réception RX. Ces moyens de communication sont commandés par l'unité de commande pour la réception de signaux numériques (tel qu'un signal multi-porteuse) sur l'antenne de réception RX, et intègrent également ici une antenne d'émission permettant au dispositif émetteur 1B d'envoyer des signaux, tels que par exemple des signaux au dispositif émetteur 1A contenant une estimation du canal de transmission entre l'antenne TX et l'antenne RX.

La mémoire morte du dispositif récepteur constitue un support d'enregistrement conforme à l'invention, lisible par le processeur de l'unité de commande et sur lequel est enregistré un programme d'ordinateur conforme à l'invention, comportant des instructions pour l'exécution des étapes d'un procédé de réception d'un signal multi-porteuse conforme à l'invention, décrites maintenant en référence à la figure 3, dans une variante particulière de réalisation.

La **figure 3** illustre les principales étapes du procédé d'émission d'au moins un signal multi-porteuse, d'un procédé de réception d'un signal multi-porteuse et du procédé de transmission de l'invention, mises en oeuvre respectivement dans le premier mode de réalisation par le dispositif émetteur 1A, le dispositif récepteur 1B et le système de communication 1 de la figure 2.

Dans ce premier mode de réalisation, une séquence de bits est transformée en une suite de symboles à valeurs réelles ($a_1, a_2,...$) d'une constellation de type PAM (étape E10), de façon connue en soi. L'invention s'appliquant à tout type de modulation OQAM, l'ordre de la constellation PAM peut être quelconque, de même que la constellation envisagée peut être une constellation différente d'une constellation PAM telle que par exemple une constellation PSK (Phase Shift Keying).

Les bits de la séquence de bits peuvent en outre être des bits codés par un code correcteur d'erreurs tels qu'un turbo-code ou un code convolutif, et/ou avoir subi un entrelacement temporel avant leur transformation en symboles PAM.

Les symboles réels PAM (aussi appelés symboles à valeurs réelles PAM) sont ensuite répartis sur M sous-porteuses via une étape de conversion série-parallèle (étape E20), de sorte à former des symboles OFDM-OQAM dans le domaine fréquentiel. On note $a_{m,n}$ le symbole réel PAM associé à la m-ième sous-porteuse à l'instant $nT/2$, T désignant la durée d'un symbole complexe.

Les symboles réels $a_{m,n}$ répartis sur les M sous-porteuses sont alors modulés conformément à schéma de modulation OFDM-OQAM (i.e. chaque symbole réel $a_{m,n}$ module une sous-porteuse m du signal), à l'aide notamment d'une transformée de Fourier inverse rapide IFFT et d'un filtre prototype f (étape E30), de façon connue en soi et non décrite en détail ici.

Le signal multiporteuse OFDM/OQAM discret *s[k]* en bande de base s'écrit alors sous la forme (après une conversion parallèle-série de l'étape E40) :

$$s[k] = \sum_{m=0}^{M-1} \sum_{n=-\infty}^{+\infty} a_{m,n} \underbrace{f\left[k - n\frac{M}{2}\right] e^{j\frac{2\pi}{M}m(k-(LF-1)/2)} e^{j\phi_{m,n}}}_{f_{m,n}[k]}$$

Dans l'exemple envisagé ici, $\phi_{m,n} = \frac{\pi}{2}(m + n).$ Cette phase permet de garantir une règle de quadrature entre deux symboles réels adjacents en temps d'une part mais également en fréquence (i.e. sur deux porteuses adjacentes). En variante, d'autres valeurs de phase garantissant cette règle peuvent être utilisées, telles que par exemple $\phi_{m,n} = \frac{\pi}{2}(m + n) + \phi_0$ avec $\phi_0$ quelconque.

Le filtre prototype f est un filtre de longueur LF vérifiant une contrainte d'orthogonalité réelle entre les sous-porteuses donnée par :

$$\Re\{\langle f_{m,n}, f_{m',n'}\rangle\} = \Re\left\{\sum_{k=-\infty}^{+\infty} f_{m,n}[k]f^*_{m',n'}[k]\right\} = \delta_{m,m'}\delta_{n,n'}$$

Autrement dit, $\langle f_{m,n}, f_{m',n'}\rangle$ est un imaginaire pur pour $(m,n) \neq (m',n')$.

Divers filtres prototypes connus vérifient une telle condition et peuvent être utilisés dans le cadre de l'invention, comme notamment un filtre prototype IOTA ou le filtre TFL1 tel que décrit dans le document D1.

Conformément à l'invention, les symboles OFDM-OQAM formant le signal multi-porteuse s sont ensuite filtrés par un préfiltre TR de retournement temporel (i.e. un filtre adapté) (étape E50), défini à partir d'une estimation du canal de transmission 2. Plus précisément, la réponse impulsionnelle (ou de façon équivalente les coefficients) du préfiltre TR est obtenue à partir de l'estimée $\hat{h}(t)$ de la réponse impulsionnelle (ou des coefficients) du canal de transmission 2 retournée dans le temps et conjuguée.

Autrement dit, le vecteur $h^{TR}$ des coefficients du préfiltre TR de retournement temporel sont donnés par :

$$h^{TR} = \left(\hat{h}^*_{L-1}, \hat{h}^*_{L-2}, ..., \hat{h}^*_0\right),$$

où $\hat{h} = (\hat{h}_0, \hat{h}_2, ..., \hat{h}_{L-1})$ désigne l'estimée des coefficients du canal de transmission. Une normalisation des coefficients du préfiltre de retournement temporel peut être mise en oeuvre afin de ne pas modifier la puissance d'émission du signal multi-porteuse.

Le signal multi-porteuse résultant de cette étape de filtrage est noté x avec :

$$x = s \otimes h^{TR}$$

où le $\otimes$ désigne l'opérateur de convolution.

Ainsi, par définition du préfiltre TR, il est nécessaire de disposer au niveau du dispositif émetteur 1A d'une connaissance des coefficients du canal de propagation 2, autrement dit, d'une estimation des coefficients $h = (h_0, h_1, ..., h_{L-1})$ du canal de propagation 2.

Diverses techniques d'estimation de canal peuvent être utilisées pour estimer le canal de propagation 2, comme par exemple les techniques d'estimation par préambule décrites pour les modulations OFDM/OQAM dans le document D1.

Dans l'exemple envisagé ici, on suppose que cette estimation est réalisée au niveau du dispositif récepteur 1B puis est transmise par une voie de retour du dispositif récepteur 1B vers le dispositif émetteur 1A. Un tel fonctionnement est classiquement utilisé dans les systèmes FDD (Frequency Division Duplex) fonctionnant en boucle fermée.

En variante, pour certains systèmes de communication tels que des systèmes mettant en oeuvre une transmission duplex de type TDD (Time Division Duplex), une réciprocité du canal de propagation entre la liaison montante et la liaison descendante est généralement admise. Pour ces systèmes, une estimation du canal réalisée par l'émetteur sur la base d'un signal reçu du récepteur peut alors être utilisée pour déterminer les coefficients du préfiltre TR à retournement temporel.

Les symboles OFDM-OQAM filtrés du signal multi-porteuse x sont ensuite émis sur le canal de transmission 2 via l'antenne d'émission TX. Le signal multi-porteuse x est un signal conforme à l'invention.

On note y le signal multi-porteuse reçu sur l'antenne de réception RX du dispositif récepteur 1B, après propagation du signal x dans le canal 2.

Le signal multi-porteuse reçu y est alors démodulé de façon classique et connue de l'homme du métier, aux travers des étapes suivantes du procédé de réception selon l'invention, mises en oeuvre par le dispositif récepteur 1B :

- conversion série-parallèle E60 (étape inverse de l'étape E40) ;
- démodulation OFDM/OQAM E70 utilisant une transformée de Fourier et un égaliseur ZF par porteuse dont l'unique coefficient est donné par $\sum_{\ell=0}^{L-1} \|\hat{h}_\ell\|^2$ (d'autres égaliseurs peuvent bien entendu être envisagés, comme par exemple un égaliseur utilisant un critère MMSE (Minimum Mean Square Error)) ;
- conversion parallèle-série E80 des symboles à valeurs réelles démodulés $\hat{a}_{m,n}$, m = 1, ..., M sur les M sous-porteuses (étape inverse de l'étape E20) ;
- conversion symbole - bits E90, conformément à la constellation choisie en émission et appliquée à l'étape E10. Un désentrelacement et un décodage des bits peuvent ensuite être mis en oeuvre si les bits traités à l'étape E10 étaient des bits codés et entrelacés, selon une opération inverse de celle mise en oeuvre à l'émission.

Comme mentionné précédemment, le procédé d'émission selon l'invention permet avantageusement d'éliminer le terme d'interférence intrinsèque imaginaire généré par l'utilisation de la modulation OFDM/OQAM.

En effet, par des calculs similaires à ceux développés dans le document D1 appliqués dans le cadre de l'invention au canal équivalent noté $H^R$ obtenu par convolution de $h^{TR}$ et de $h$ et en supposant que l'estimation du canal disponible au niveau du dispositif émetteur 1A est parfaite, on peut montrer que le signal démodulé pour la m-ième sous-porteuse à l'instant n, peut s'écrire sous la forme suivante :

$$y_{m,n} = H^R_{m,n} a_{m,n} + jI_{m,n} + \eta_{m,n}$$

où $H^R_{m,n}$ désigne le coefficient réel du canal équivalent $H^R$ à la position temps-fréquence (m,n) et :

$$I_{m,n} = \sum_{\substack{p,q, \\ (p,q) \neq (0,0)}} a_{m+p,n+q} \, H^R_{m+p,n+q} \langle f \rangle^{m,n}_{m+p,n+q}$$

$I_{m,n}$ est donc une quantité réelle (contrairement à l'interférence $J_{m,n}$ décrite précédemment dans le cas OFDM-OQAM sans retournement temporel), qui peut être aisément supprimée en ne considérant que la partie réelle du signal $y_{m,n}$. Une simple égalisation de type ZF avec un coefficient par sous-porteuse est alors suffisante pour obtenir une estimée â$_{m,n}$ des symboles a$_{m,n}$ émis par le dispositif émetteur 1A, soit :

$$\hat{a}_{m,n} = a_{m,n} + \Re(\eta_{m,n})$$

On comprend bien dès lors que l'invention, par le biais d'un préfiltre de retournement temporel du canal de propagation, offre un schéma d'émission qui ne souffre pas de perte d'efficacité spectrale tout en en préservant un schéma de réception simple.

Il est également possible d'appliquer ce même principe à un système comportant une pluralité d'antennes d'émission et une antenne en réception (système MISO).

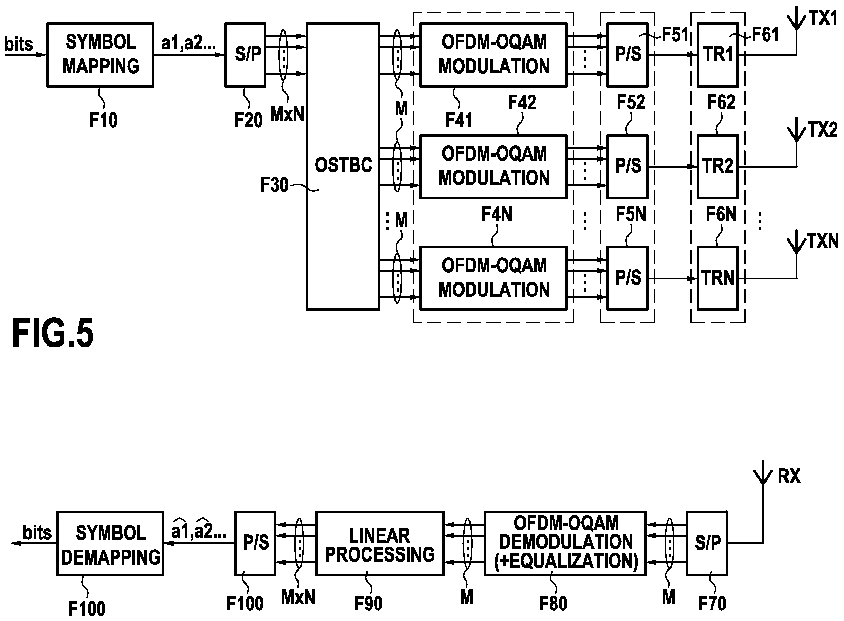

Ainsi, nous allons maintenant décrire en référence aux figures 4 et 5 un second mode de réalisation dans lequel le principe de retournement temporel est appliqué conformément à l'invention à une modulation OFDM-OQAM dans le cadre d'un système MISO utilisant un code spatio-temporel orthogonal réel de rendement 1. Le rendement d'un code spatio-temporel (ou spatio-fréquentiel) appliqué à N antennes d'émission est défini comme le ratio du nombre de symboles utiles sur le nombre de durées symboles nécessaires à leur transmission.

La **figure 4** représente un système de communication MISO 1' conforme à l'invention dans ce second mode de réalisation.

Conformément à l'invention, le système de communication 1' comprend :

- un dispositif émetteur 1A', conforme à l'invention, et disposant de N antennes d'émission TX1,TX2,...,TXN ; et
- un dispositif récepteur 1B', conforme à l'invention, équipé d'une antenne de réception RX.

Les dispositifs émetteur 1A' et récepteur 1B' sont séparés par un canal de transmission 2' formé de N sous-canaux (ou canaux) 2_1', 2_2', 2_N'. Plus précisément, dans le cadre d'un système MISO, chaque antenne d'émission TXj, j=1,...,N du dispositif émetteur 1A' est séparée de l'antenne de réception RX du dispositif récepteur 1B' par un canal de transmission 2_1',2_2',...,2_N', chaque canal 2_n' étant supposé ici sélectif en fréquence et composé respectivement de Lj, j=1,..,N trajets complexes distribués selon une loi gaussienne. Les coefficients complexes du canal de propagation 2_j', j=1,...,N sont notés h$^{(j)}$ = (h$_0$$^{(j)}$, h$_1$$^{(j)}$,..., h$_{Lj-1}$$^{(j)}$).

On suppose en outre ici, par souci de simplification, que L1=L2=...=LN=L. Toutefois l'invention s'applique également pour des longueurs Lj, j=1,...,N distinctes.

Le dispositif émetteur 1A' dispose ici de l'architecture matérielle d'un ordinateur. Il comprend notamment une unité de commande 3' équipée d'un processeur, une mémoire vive 4', une mémoire morte 5', ainsi que des moyens de communication 6' intégrant les antennes d'émission TX1, TX2,... TXN. Ces moyens de communication 6' sont commandés par l'unité de commande 3' pour l'émission de signaux numériques (tel que des signaux multi-porteuses) via les antennes d'émission TX1, TX2,... TXN, et intègrent également ici au moins une antenne de réception (non représentée) permettant au dispositif émetteur 1A' de recevoir des signaux, tels que par exemple des signaux issus du dispositif récepteur 1B' contenant une estimation des canaux de transmission entre les antennes TX1, TX2,... TXN et l'antenne RX.

La mémoire morte 5' du dispositif émetteur 1A' constitue un support d'enregistrement conforme à l'invention, lisible par le processeur de l'unité de commande 3' et sur lequel est enregistré un programme d'ordinateur conforme à l'invention, comportant des instructions pour l'exécution des étapes d'un procédé d'émission de signaux multiporteuse conforme à l'invention dans le second mode de réalisation, décrites maintenant en référence à la figure 5, dans une variante particulière de réalisation.

Le dispositif récepteur 1B' a une architecture matérielle similaire au dispositif récepteur 1B décrit précédemment pour le premier mode de réalisation. Dans le mode de réalisation décrit ici, les instructions pour l'exécution des étapes d'un procédé de réception conforme à l'invention dans le second mode de réalisation sont comprises dans un programme d'ordinateur, enregistré dans une mémoire morte du dispositif récepteur 1B'.

La **figure 5** illustre les principales étapes d'un procédé d'émission d'un signal multiporteuse, d'un procédé de réception et d'un procédé de transmission conformes à l'invention mises en oeuvre respectivement par le dispositif 1A', le dispositif 1B' et le système de communication 1' de la figure 4 dans un second mode de réalisation dans lequel on utilise en émission un code spatio-temporel orthogonal réel de rendement 1 pour répartir les symboles OFDM-OQAM sur les N antennes d'émission.

Plus précisément, dans ce second mode de réalisation, une séquence de bits (éventuellement codés et entrelacés comme dans le premier mode de réalisation) est transformée en une suite de symboles réels (a$_1$,a$_2$,...) d'une constellation de type PAM (étape F10'), de façon connue en soi. L'invention s'appliquant à tout type de modulation OQAM, l'ordre de la constellation PAM peut être quelconque et d'autres constellations peuvent être envisagées.

Les symboles réels PAM (aussi appelés symboles à valeurs réelles PAM) sont ensuite répartis sur M sous-porteuses et N antennes au cours d'une étape de conversion série-parallèle (étape F20), de sorte à former des symboles OFDM-OQAM dans le domaine fréquentiel pour chaque antenne d'émission. On note a$_{m,n}$ le symbole réel PAM associé à la m-ième sous-porteuse à l'instant n.

Les symboles réels PAM $a_{m,n}$ sont ensuite codés lors d'une étape de codage selon ici une dimension spatiale et une dimension temporelle de sorte à générer N séquences de symboles codés pour les N antennes d'émission (étape F30).

Plus précisément, comme mentionné précédemment, dans le second mode de réalisation décrit ici, on envisage le codage des symboles $a_{m,n}$ sur les N antennes d'émission par un code spatio-temporel orthogonal réel de rendement 1 (i.e. toutes les composantes de la matrice de codage GRN définissant ce code sont réelles). De tels codes sont connus de l'homme du métier, et décrits notamment dans le document de S. Alamouti cité précédemment pour un nombre d'antennes d'émission N égal à 2 et dans le document de V. Tarokh et al. intitulé « Space-time block codes from orthogonal designs », IEEE Transactions on Information Theory, vol. 45, 1999, pour un nombre d'antennes d'émission quelconque.

De façon générale, ces codes sont définis par une matrice de codage de dimensions NxN. Pour illustrer l'invention, nous supposons ici que N=2, et nous envisageons un codage spatio-temporel des symboles réels $a_{m,n}$ répartis sur les M sous-porteuses, défini par la matrice de codage GR2 réelle orthogonale suivante déduite de la matrice d'Alamouti GC2 présentée précédemment :

$$GR2 = \underbrace{\begin{bmatrix} a_{m,n} & -a_{m,n+1} \\ a_{m,n+1} & a_{m,n} \end{bmatrix}}_{\text{antenne} \downarrow, \text{temps} \rightarrow}$$

la j-ème ligne de la matrice GR2 indiquant les symboles émis sur chaque temps symbole sur l'antenne TXj.

Pour N=4, un exemple de matrice de codage GR4 orthogonale réelle de rendement 1 pouvant être appliquée au cours de l'étape F30 dans le contexte de l'invention est :

$$GR4 = \underbrace{\begin{bmatrix} a_{m,n} & a_{m,n+1} & a_{m,n+2} & a_{m,n+3} \\ -a_{m,n+1} & a_{m,n} & -a_{m,n+3} & a_{m,n+2} \\ -a_{m,n+2} & a_{m,n+3} & a_{m,n} & -a_{m,n+1} \\ -a_{m,n+3} & -a_{m,n+2} & a_{m,n+1} & a_{m,n} \end{bmatrix}}_{\text{antenne} \downarrow, \text{temps} \rightarrow}$$

Bien entendu, l'invention s'applique à d'autres codes spatio-temporels orthogonaux réels de rendement 1.

Ainsi, au cours de l'étape F30 de codage, on applique pour chaque sous-porteuse m, m=1,...M, la matrice GR2 aux symboles à valeurs réelles $a_{m,n}$ associés à cette sous-porteuse. On obtient ainsi N séquences de symboles codés pour les N antennes, i.e. chaque séquence codée obtenue est associée à une antenne d'émission. Ces symboles codés sont des symboles réels, la matrice GR2 étant une matrice réelle.

Les N séquences de symboles codés sont ensuite modulées respectivement pour les N antennes d'émission conformément à schéma de modulation OFDM-OQAM (i.e. chaque symbole codé d'une séquence associée à une antenne d'émission module une sous-porteuse d'un symbole OFDM-OQAM associé à cette antenne) (étape F41 pour l'antenne TX1, F42 pour l'antenne TX2, etc. regroupée sous l'étape F40), à l'aide notamment d'une transformée de Fourrier inverse rapide IFFT et d'un filtre prototype f (étape F40), puis convertis selon une opération de conversion parallèle-série réalisée indépendamment sur chaque antenne (étape F50 regroupant les étapes F51, F52, F5N réalisées respectivement pour les antennes TX1, TX2,..., TXN), de façon similaire au premier mode de réalisation pour l'antenne TX.

Puis, conformément à l'invention, pour chaque antenne TXj, j=1,...,N, les symboles OFDM-OQAM formant le signal multiporteuse OFDM/OQAM codé $s^{(j)}$ pour cette antenne TXj sont filtrés par un préfiltre TRj de retournement temporel (étape F61 pour l'antenne TX1, F62 pour l'antenne TX,... F6N pour l'antenne TXN, regroupées sous l'étape de filtrage F60), défini à partir d'une estimation du canal de transmission 2_j'.

La réponse impulsionnelle du préfiltre TRj appliqué pour l'antenne TXj, j=1,...N est obtenue à partir de la réponse impulsionnelle retournée dans le temps et conjuguée d'une estimée du canal de transmission 2_j' entre l'antenne d'émission TXj et l'antenne de réception RX. Autrement dit, le vecteur $h^{TR(j)}$ des coefficients du préfiltre TRj de retournement temporel pour l'antenne d'émission TXj sont donnés par :

$$h^{TR(j)} = \left(\left(\hat{h}_{L-1}^{(j)}\right)^*, \left(\hat{h}_{L-2}^{(j)}\right)^*, \dots, \left(\hat{h}_0^{(j)}\right)^*\right).$$

où $\hat{h}^{(j)} = \left(\hat{h}_0^{(j)}, \hat{h}_1^{(j)}, \dots, \hat{h}_{L-1}^{(j)}\right)$ désigne l'estimée des coefficients du canal de propagation 2_j' entre l'antenne d'émission TXj et l'antenne de réception RX.

Une normalisation des coefficients des filtres TRj peut être mise en oeuvre sur l'ensemble des antennes d'émission afin de ne pas modifier la puissance d'émission des signaux multiporteuses. Le signal multiporteuse résultant pour chaque antenne TXj, j=1,...,N de ces étapes de filtrage est noté $x^{(j)}$ avec $x^{(j)} = s^{(j)} \otimes h^{TR(j)}$.

L'estimation $\hat{h}^{(j)} = \left(\hat{h}_0^{(j)}, \hat{h}_1^{(j)}, \dots, \hat{h}_{L-1}^{(j)}\right)$ des coefficients de chaque canal 2_j' peut être obtenue comme dans le premier mode de réalisation soit par une voie retour mise en oeuvre depuis le récepteur 1B' soit en supposant une réciprocité du canal de propagation à partir des coefficients estimés lors d'une transmission dans le sens 1B'-1A'.

Les signaux multiporteuses filtrés $x^{(j)}$, j = 1,..N sont ensuite émis sur le canal de propagation 2' via leurs antennes d'émission respectives TXj, j=1,...,N. Le signal composé des signaux multiporteuses $x^{(j)}$ est un signal conforme à l'invention.

On note y' le signal multiporteuse reçu sur l'antenne de réception RX du dispositif récepteur 1B, après propagation des signaux $x^{(j)}$, j=1,...,N dans le canal 2'. Le signal reçu y' est égal à la somme des signaux reçus de chaque antenne d'émission Txj, j=1,...,N soit :

$$y' = \sum_{j=1}^{N} x^{(j)} \otimes h^{(j)} + \eta$$

où $\eta$ désigne un bruit blanc additif gaussien.

Les différents symboles du signal multiporteuse reçu y' sont répartis lors d'une conversion série-parallèle sur M sous-porteuses (étape F70), puis une transformée de Fourier FFT est appliquée afin de démoduler les symboles OFDM-OQAM (étape F80), de façon similaire au premier mode de réalisation.

Dans l'exemple d'un codage spatio-temporel réalisé à l'aide la matrice GR2 envisagé précédemment, pour chaque porteuse m, les symboles obtenus après transformation FFT pour chaque porteuse m aux instants nT et (n+1)T sont donnés par les équations suivantes :

$$y'_{m,n} = H_{m,n}^{R(0)} a_{m,n} + H_{m,n}^{R(1)} a_{m,n+1} + \eta_{m,n}$$

$$y'_{m,n+1} = -H_{m,n}^{R(0)} a_{m,n+1} + H_{m,n}^{R(1)} a_{m,n} + \eta_{m,n+1}$$

où $\eta_{m,n}$ et $\eta_{m,n+1}$ désignent les composantes du bruit blanc additif gaussien $\eta$ pour la m-ième porteuse à l'instant nT.

Cette expression peut également s'écrire sous forme matricielle selon l'expression suivante :

$$\begin{bmatrix} y'_{m,n} \\ y'_{m,n+1} \end{bmatrix} = \underbrace{\begin{bmatrix} H_{m,n}^{R(0)} & H_{m,n}^{R(1)} \\ H_{m,n}^{R(1)} & -H_{m,n}^{R(0)} \end{bmatrix}}_{HC} \begin{bmatrix} a_{m,n} \\ a_{m,n+1} \end{bmatrix} + \begin{bmatrix} \eta_{m,n} \\ \eta_{m,n+1} \end{bmatrix}$$

La matrice **HC** étant une matrice orthogonale, il est possible de retrouver via un traitement linéaire simple connu en soi les symboles $a_{m,n}$ émis. Une estimation $\hat{a}_{m,n}$ des symboles réels est ainsi obtenue à partir des symboles $y'_{m,n}$ issus de la FFT à l'aide de ce traitement linéaire réalisé pour chaque sous-porteuse m (étape F90).

Après une conversion parallèle-série des symboles réels estimés pour chaque porteuse (étape F100, réalisant le traitement inverse de l'étape F20), les symboles sont convertis en bits (étape F110), conformément à la constellation choisie en émission et appliquée à l'étape F10. Un désentrelacement et un décodage des bits sont ensuite mis en oeuvre si les bits traités à l'étape F10 étaient codés et entrelacés, selon une opération inverse de celle mise en oeuvre à l'émission.

Ainsi, comme mentionné précédemment, le procédé d'émission selon l'invention permet avantageusement d'éliminer les termes d'interférences intrinsèques générées par l'utilisation de la modulation OFDM/OQAM, y compris pour un système MISO.

On comprend bien dès lors que l'invention, par le biais d'un préfiltre de retournement temporel du canal de propagation appliqué pour chaque antenne d'émission, offre un schéma d'émission qui ne souffre pas de perte d'efficacité spectrale et qui permet d'utiliser des codes spatio-temporels de rendement 1, tout en en préservant un schéma de réception simple.

Dans le second mode de réalisation décrit ici, on a envisagé un codage spatio-temporel réel orthogonal de rendement 1 des symboles $a_{m,n}$ (i.e. répartition des symboles $a_{m,n}$ en temps et en espace). Toutefois l'invention s'applique également à un codage orthogonal de rendement 1 des symboles à valeurs réelles $a_{m,n}$ opérant selon une dimension spatiale et une dimension fréquentielle (codage spatio-fréquentiel). Pour N=2 antennes d'émission, un tel code est défini par exemple par la matrice de codage GRF2 réelle orthogonale suivante :

$$ GRF2 = \underbrace{\begin{bmatrix} a_{m,n} & -a_{m+1,n} \\ a_{m+1,n} & a_{m,n} \end{bmatrix}}_{antenne\downarrow,porteuse\rightarrow} $$

la j-ème ligne de la matrice GRF2 indiquant les symboles émis sur chaque porteuse sur l'antenne TXj.

En outre, dans le second mode de réalisation décrit ici, on a envisagé un code réel orthogonal de rendement 1. Toutefois l'invention s'applique également à des codes réels spatio-temporels non orthogonaux (auquel cas, un décodage non linéaire en réception est envisagé), ainsi qu'à des codes ayant un rendement inférieur à 1.

Dans le second mode de réalisation décrit ici, on a envisagé l'utilisation d'un code spatio-temporel en émission. Toutefois l'invention s'applique également à un système MISO « simple », ne mettant pas en oeuvre de codage spatio-temporel ou spatio-fréquentiel (et donc ne requérant pas de module de traitement linéaire en réception).

Dans les modes de réalisation décrits ici, on a envisagé la transmission de signaux multi-porteuses de type OFDM-OQAM. Toutefois, le principe de retournement temporel appliqué à une modulation OQAM peut également être mis en oeuvre pour la transmission de signaux mono-porteuses. On note qu'un signal mono-porteuse est un cas particulier d'un signal multi-porteuse avec M=1 (autrement dit les développements envisagés dans cette description peuvent être repris pour le cas multi-porteuse en considérant M=1, M étant le nombre de porteuses).

Dans ce cas, le procédé d'émission comprend, pour chaque antenne d'émission du dispositif émetteur :

- une étape de filtrage de symboles OQAM associés à cette antenne d'émission par un filtre de retournement temporel défini à partir d'une estimation d'un canal de transmission entre cette antenne d'émission et l'antenne de réception ; et
- une étape d'émission des symboles OQAM filtrés via cette antenne d'émission sur le canal.

On peut également envisager que ce procédé d'émission d'au moins un signal mono-porteuse présente en combinaison tout ou partie des caractéristiques précitées (ex. codage spatio-temporel ou spatio-fréquentiel réel et orthogonal, etc.).

De manière générale, le principe de retournement temporel présenté dans cette description peut être appliqué, pour obtenir des avantages similaires à ceux de l'invention, à tout signal utilisant l'orthogonalité réelle.

**Revendications**

1. Procédé d'émission d'au moins un signal multi-porteuse formé de symboles OFDM-OQAM à destination d'une antenne de réception (RX) d'un dispositif récepteur, ledit procédé d'émission étant destiné à être mis en oeuvre par un dispositif émetteur (1A') comportant un nombre N d'antennes d'émission supérieur à 1 (TX1,TX2,...,TXN), ledit procédé d'émission comprenant, pour chaque antenne d'émission (TX1,TX2,...,TXN) du dispositif émetteur (1A') :

   - une étape de filtrage (F61, F62,..., F6N) de symboles OFDM-OQAM associés à cette antenne d'émission par un préfiltre de retournement temporel (TR1,TR2,...,TRN) défini à partir d'une estimation d'un canal de transmission (2_1', 2_2',..., 2_N') entre ladite antenne d'émission (TX1, TX2,..., TXN) et ladite antenne de réception (RX) ;
   - une étape d'émission des symboles OFDM-OQAM filtrés via ladite antenne d'émission (TX1, TX2,..., TXN) sur ledit canal de transmission (2_1', 2_2',..., 2_N') ;

ledit procédé d'émission comprenant en outre une étape de codage (F30) au cours de laquelle on applique à des symboles à valeurs réelles un codage défini par une matrice de codage réelle déterminée générant N séquences de symboles codés associées auxdites N antennes d'émission, un symbole codé d'une séquence de symboles codés associée à une antenne d'émission modulant une porteuse d'un dit symbole OFDM-OQAM associé à cette antenne.

2.  Procédé d'émission selon la revendication 1, dans lequel la matrice de codage réelle est une matrice orthogonale réelle.

3.  Procédé d'émission selon la revendication 1 dans lequel le codage appliqué au cours de l'étape de codage (F30) est de rendement 1.

4.  Procédé d'émission selon la revendication 1 dans lequel le codage appliqué au cours de l'étape de codage (F30) est un codage spatio-temporel.

5.  Procédé d'émission selon la revendication 1 dans lequel le codage appliqué au cours de l'étape de codage (F30) est un codage spatio-fréquentiel.

6.  Programme d'ordinateur comportant des instructions pour l'exécution des étapes du procédé d'émission selon l'une quelconque des revendications 1 à 5 lorsque ledit programme est exécuté par un ordinateur.

7.  Support d'enregistrement lisible par un ordinateur sur lequel est enregistré un programme d'ordinateur comprenant des instructions pour l'exécution des étapes du procédé d'émission selon l'une quelconque des revendications 1 à 5.

8.  Procédé de transmission d'au moins un signal multi-porteuse de type OFDM-OQAM mis en oeuvre par un système de communication (1) comprenant un dispositif émetteur (1A') comportant un nombre N d'antennes d'émission supérieur à 1 (TX1,TX2,...,TXN) et un dispositif récepteur (1B') comportant une antenne de réception (RX), ledit procédé comprenant :

    - l'émission dudit au moins un signal multi-porteuse par ledit dispositif émetteur (1A') conformément à un procédé d'émission selon la revendication 1 ; et
    - la réception dudit au moins un signal multi-porteuse par ledit dispositif récepteur (1B') comprenant une étape (F80) de démodulation OFDM-OQAM dudit signal multi-porteuse reçu.

9.  Dispositif émetteur (1A') comportant un nombre N d'antennes d'émission supérieur à 1 (TX1,TX2,...,TXN) et apte à émettre au moins un signal multi-porteuse de type OFDM-OQAM sur lesdites antennes d'émission (TX1,TX2,...,TXN) à destination d'une antenne de réception (RX) d'un dispositif récepteur (1B'), ledit dispositif émetteur (1A ; 1A') comprenant, associés à chaque antenne d'émission (TX1,TX2,...,TXN) :

    - des moyens de filtrage de symboles OFDM-OQAM associés à cette antenne d'émission comprenant un préfiltre (TR1,TR2,...,TRN) de retournement temporel défini à partir d'une estimation d'un canal de transmission (2_1', 2_2',..., 2_N') entre ladite antenne d'émission (TX1, TX2,..., TXN) et ladite antenne de réception (RX) ;
    - des moyens d'émission des symboles OFDM-OQAM filtrés via ladite antenne d'émission (TX1, TX2,..., TXN) sur ledit canal de transmission (2_1', 2_2',..., 2_N') ;

    ledit dispositif émetteur comportant en outre des moyens de codage adaptés à appliquer à des symboles à valeurs réelles un codage défini par une matrice de codage réelle déterminée générant N séquences de symboles codés associées auxdites N antennes d'émission, un symbole codé d'une séquence de symboles codés associée à une antenne d'émission modulant une porteuse d'un dit symbole OFDM-OQAM associé à cette antenne.

10. Système de communication (1) comprenant :

    - un dispositif émetteur (1A') conforme à la revendication 9, comportant un nombre N d'antennes d'émission supérieur à 1 (TX1,TX2,...,TXN) et apte à émettre au moins un signal multi-porteuse de type OFDM-OQAM sur lesdites antennes d'émission (TX1,TX2,...,TXN) ; et
    - un dispositif récepteur (1B'), comportant une antenne de réception (RX) et apte à recevoir ledit au moins un signal multi-porteuse sur ladite antenne de réception, ledit dispositif récepteur comportant un démodulateur OFDM-OQAM apte à démoduler ledit signal multi-porteuse reçu.

**11.** Signal composé d'au moins un signal multi-porteuse de type OFDM-OQAM émis par un dispositif d'émission comportant un nombre N d'antennes d'émission supérieur à 1, conformément à un procédé d'émission selon la revendication 1.

**Patentansprüche**

**1.** Verfahren zum Senden wenigstens eines Mehrträgersignals, das von OFDM-OQAM-Symbolen gebildet wird, an eine Empfangsantenne (RX) einer Empfangsvorrichtung, wobei das Sendeverfahren dazu bestimmt ist, von einer Sendevorrichtung (1A') durchgeführt zu werden, die eine Anzahl N von Sendeantennen, die größer als 1 ist (TX1, TX2, ..., TXN), aufweist,
wobei das Sendeverfahren für jede Sendeantenne (TX1, TX2, ..., TXN) der Sendevorrichtung (1A') umfasst:

- einen Schritt der Filterung (F61, F62, ..., F6N) von OFDM-OQAM-Symbolen, die dieser Sendeantenne zugeordnet sind, durch ein Zeitumkehr-Vorfilter (TR1, TR2, ..., TRN), das ausgehend von einer Schätzung eines Übertragungskanals (2_1', 2_2', ..., 2_N') zwischen der Sendeantenne (TX1, TX2, ..., TXN) und der Empfangsantenne (RX) definiert ist;
- einen Schritt des Sendens der gefilterten OFDM-OQAM-Symbole über die Sendeantenne (TX1, TX2, ..., TXN) auf dem Übertragungskanal (2_1', 2_2', ..., 2_N') ;

wobei das Sendeverfahren außerdem einen Schritt der Codierung (F30) umfasst, in welchem auf Symbole mit reellen Werten eine durch eine bestimmte reelle Codiermatrix definierte Codierung angewendet wird, die N Folgen von codierten Symbolen erzeugt, die den N Sendeantennen zugeordnet sind, wobei ein codiertes Symbol einer Folge von codierten Symbolen, die einer Sendeantenne zugeordnet ist, einen Träger eines besagten OFDM-OQAM-Symbols moduliert, das dieser Antenne zugeordnet ist.

**2.** Sendeverfahren nach Anspruch 1, wobei die reelle Codiermatrix eine reelle orthogonale Codiermatrix ist.

**3.** Sendeverfahren nach Anspruch 1, wobei die im Schritt der Codierung (F30) angewendete Codierung den Wirkungsgrad 1 hat.

**4.** Sendeverfahren nach Anspruch 1, wobei die im Schritt der Codierung (F30) angewendete Codierung eine Raum-Zeit-Codierung ist.

**5.** Sendeverfahren nach Anspruch 1, wobei die im Schritt der Codierung (F30) angewendete Codierung eine Raum-Frequenz-Codierung ist.

**6.** Computerprogramm, welches Befehle zur Ausführung der Schritte des Sendeverfahrens nach einem der Ansprüche 1 bis 5, wenn das Programm von einem Computer ausgeführt wird, umfasst.

**7.** Computerlesbares Aufzeichnungsmedium, auf welchem ein Computerprogramm aufgezeichnet ist, das Befehle zur Ausführung der Schritte des Sendeverfahrens nach einem der Ansprüche 1 bis 5 umfasst.

**8.** Verfahren zur Übertragung wenigstens eines Mehrträgersignals vom Typ OFDM-OQAM, das von einem Kommunikationssystem (1) durchgeführt wird, das eine Sendevorrichtung (1A'), die eine Anzahl N von Sendeantennen aufweist, die größer als 1 ist (TX1, TX2, ..., TXN), und eine Empfangsvorrichtung (1B'), die eine Empfangsantenne (RX) aufweist, umfasst, wobei das Verfahren umfasst:

- das Senden des wenigstens einen Mehrträgersignals durch die Sendevorrichtung (1A') gemäß einem Sendeverfahren nach Anspruch 1; und
- das Empfangen des wenigstens einen Mehrträgersignals durch die Empfangsvorrichtung (1B'), welches einen Schritt (F80) der OFDM-OQAM-Demodulation des empfangenen Mehrträgersignals umfasst.

**9.** Sendevorrichtung (1A'), welche eine Anzahl N von Sendeantennen, die größer als 1 ist (TX1, TX2, ..., TXN), aufweist und in der Lage ist, wenigstens ein Mehrträgersignal vom Typ OFDM-OQAM über die Sendeantennen (TX1, TX2, ..., TXN) an eine Empfangsantenne (RX) einer Empfangsvorrichtung (1B') zu senden, wobei die Sendevorrichtung (1A; 1A') umfasst, jeder Sendeantenne (TX1, TX2, ..., TXN) zugeordnet:

- Mittel zur Filterung von OFDM-OQAM-Symbolen, die dieser Sendeantenne zugeordnet sind und ein Zeitumkehr-Vorfilter (TR1, TR2, ..., TRN) umfassen, das ausgehend von einer Schätzung eines Übertragungskanals (2_1', 2_2', ..., 2_N') zwischen der Sendeantenne (TX1, TX2, ..., TXN) und der Empfangsantenne (RX) definiert ist;

- Mittel zum Senden der gefilterten OFDM-OQAM-Symbole über die Sendeantenne (TX1, TX2, ..., TXN) auf dem Übertragungskanal (2_1', 2_2', ..., 2_N') ;

wobei die Sendevorrichtung außerdem Mittel zur Codierung aufweist, die dafür ausgelegt sind, auf Symbole mit reellen Werten eine durch eine bestimmte reelle Codiermatrix definierte Codierung anzuwenden, die N Folgen von codierten Symbolen erzeugt, die den N Sendeantennen zugeordnet sind, wobei ein codiertes Symbol einer Folge von codierten Symbolen, die einer Sendeantenne zugeordnet ist, einen Träger eines besagten OFDM-OQAM-Symbols moduliert, das dieser Antenne zugeordnet ist.

10. Kommunikationssystem (1), welches umfasst:

- eine Sendevorrichtung (1A') gemäß Anspruch 9, die eine Anzahl N von Sendeantennen aufweist, die größer als 1 ist (TX1, TX2, ..., TXN), und in der Lage ist, wenigstens ein Mehrträgersignal vom Typ OFDM-OQAM über die Sendeantennen (TX1, TX2, ..., TXN) zu senden; und
- eine Empfangsvorrichtung (1B'), die eine Empfangsantenne (RX) aufweist und in der Lage ist, das wenigstens eine Mehrträgersignal über die Empfangsantenne zu empfangen, wobei die Empfangsvorrichtung einen OFDM-OQAM-Demodulator aufweist, der in der Lage ist, das empfangene Mehrträgersignal zu demodulieren.

11. Signal, welches aus wenigstens einem Mehrträgersignal vom Typ OFDM-OQAM besteht, das von einer Sendevorrichtung, die eine Anzahl N von Sendeantennen aufweist, die größer als 1 ist, gemäß einem Sendeverfahren nach Anspruch 1 gesendet wird.

**Claims**

1. Method for transmitting at least one multi-carrier signal formed of OFDM-OQAM symbols destined for a reception antenna (RX) of a receiver device, said transmitting method being intended to be implemented by a transmitter device (1A') comprising a number N greater than 1 of transmit antennas (TX1,TX2,...,TXN), said transmitting method comprising, for each transmit antenna (TX1,TX2,...,TXN) of the transmitter device (1A') :

- a step of filtering (F61, F62,..., F6N) of OFDM-OQAM symbols associated with this transmit antenna by a time-reversal prefilter (TR1,TR2,...,TRN) defined on the basis of an estimation of a transmission channel (2_1', 2_2',..., 2_N') between said transmit antenna (TX1, TX2,..., TXN) and said reception antenna (RX) ;
- a step of transmitting the filtered OFDM-OQAM symbols via said transmit antenna (TX1, TX2,..., TXN) on said transmission channel (2_1', 2_2',..., 2_N');

said transmitting method furthermore comprising a coding step (F30) in the course of which a coding defined by a determined real coding matrix is applied to real-valued symbols generating N coded-symbol sequences associated with said N transmit antennas, a coded symbol of a coded-symbol sequence associated with a transmit antenna modulating a carrier of a said OFDM-OQAM symbol associated with this antenna.

2. Transmitting method according to Claim 1, in which the real coding matrix is a real orthogonal matrix.

3. Transmitting method according to Claim 1, in which the coding applied in the course of the coding step (F30) is of rate 1.

4. Transmitting method according to Claim 1, in which the coding applied in the course of the coding step (F30) is a space-time coding.

5. Transmitting method according to Claim 1, in which the coding applied in the course of the coding step (F30) is a space-frequency coding.

6. Computer program comprising instructions for the execution of the steps of the transmitting method according to any one of Claims 1 to 5 when said program is executed by a computer.

7. Recording medium readable by a computer on which is recorded a computer program comprising instructions for the execution of the steps of the transmitting method according to any one of Claims 1 to 5.

8. Method for transmitting at least one multi-carrier signal of OFDM-OQAM type implemented by a communication system (1) comprising a transmitter device (1A') comprising a number N greater than 1 of transmit antennas (TX1,TX2,...,TXN) and a receiver device (1B') comprising a reception antenna (RX), said method comprising:

   - the transmission of said at least one multi-carrier signal by said transmitter device (1A') in accordance with a transmitting method according to Claim 1; and
   - the reception of said at least one multi-carrier signal by said receiver device (1B') comprising a step (F80) of OFDM-OQAM demodulation of said multi-carrier signal received.

9. Transmitter device (1A') comprising a number N greater than 1 of transmit antennas (TX1,TX2,...,TXN) and able to transmit at least one multi-carrier signal of OFDM-OQAM type on said transmit antennas (TX1,TX2,...,TXN) destined for a reception antenna (RX) of a receiver device (1B'), said transmitter device (1A; 1A') comprising, associated with each transmit antenna (TX1,TX2,...,TXN):

   - means for filtering OFDM-OQAM symbols associated with this transmit antenna comprising a time-reversal prefilter (TR1,TR2,...,TRN) defined on the basis of an estimation of a transmission channel (2_1', 2_2',..., 2_N') between said transmit antenna (TX1, TX2,..., TXN) and said reception antenna (RX);
   - means for transmitting the filtered OFDM-OQAM symbols via said transmit antenna (TX1, TX2,..., TXN) on said transmission channel (2_1', 2_2',..., 2_N'); said transmitter device furthermore comprising coding means adapted to apply a coding defined by a determined real coding matrix to real-valued symbols generating N coded-symbol sequences associated with said N transmit antennas, a coded symbol of a coded-symbol sequence associated with a transmit antenna modulating a carrier of a said OFDM-OQAM symbol associated with this antenna.

10. Communication system (1) comprising:

   - a transmitter device (1A') in accordance with Claim 9, comprising a number N greater than 1 of transmit antennas (TX1,TX2,...,TXN) able to transmit at least one multi-carrier signal of OFDM-OQAM type on said transmit antennas (TX1,TX2,...,TXN); and
   - a receiver device (1B'), comprising a reception antenna (RX) and able to receive said at least one multi-carrier signal on said reception antenna, said receiver device comprising an OFDM-OQAM demodulator able to demodulate said multi-carrier signal received.

11. Signal composed of at least one multi-carrier signal of OFDM-OQAM type transmitted by a transmit device comprising a number N greater than 1 of transmit antennas, in accordance with a transmitting method according to Claim 1.

EP 2 795 863 B1

**FIG.1**

C(z)

OFDM-OQAM
MODULATION → PREFILTER
H*(z⁻¹) → CHANNEL
H(z) → OFDM-OQAM
DEMODULATION

CSI

**FIG.2**

1A          1        1B

3  4  5

6

TX      RX

2

E10        E20  M      E30        E40      E50      TX

bits → SYMBOL
MAPPING → a1,a2... → S/P → OFDM-OQAM
MODULATION → P/S → TR

RX

**FIG.3**

bits ← SYMBOL
DEMAPPING ← â1,â2... ← P/S ← OFDM-OQAM
DEMODULATION
(+EQUALIZATION) ← P/S

E90        E80  M      E70        E60

**FIG.4**

1A'        1'        1B'

3'  4'  5'

6'

TX1      2-1'
TX2      2-2'      RX
TXN      2-N'

2'

**FIG.5**

EP 2 795 863 B1

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2733869

**Littérature non-brevet citée dans la description**

- **C. LÉLÉ et al.** Channel estimation methods for preamble-based OFDM/OQAM modulations. European Wireless, Avril 2007
- A simple Transmis Diversity Technique for Wireless Communications. **S. ALAMOUTI.** Journal of Selected Areas Communication. IEEE, 1998, 1451-1458
- **CHRISLIN LELE.** *The Alamouti Scheme with CDMA-OFDM/OQAM*
- **V. TAROKH et al.** Space-time block codes from orthogonal designs. *IEEE Transactions on Information Theory,* 1999, vol. 45